# EUROPÄISCHE PATENTSCHRIFT

(11) **EP 0 589 826 B1**
(45) Veröffentlichungstag und Bekanntmachung des Hinweises auf die Patenterteilung: **22.01.1997**
(21) Anmeldenummer: 93810416.3
(22) Anmeldetag: 09.06.1993
(51) Int. Cl.: B24B 49/02, B23Q 17/22, B24B 47/22

(54) **Schleifmaschine**
Grinding machine
Machine de meulage

(30) Priorität: 27.08.1992 CH 2672/92
(43) Veröffentlichungstag der Anmeldung: 30.03.1994
(73) Patentinhaber: L. KELLENBERGER & CO. AG, CH-9009 St. Gallen (CH)
(72) Erfinder: Ilek, Anton, CH-9034 Eggersriet (CH); Thurnherr, Hugo, CH-9008 St. Gallen (CH); Eugster, Emil, CH-9050 Appenzell (CH); Gschwend, Bernard, CH-9016 St. Gallen (CH)
(74) Vertreter: Kulhavy, Sava V.

(56) Entgegenhaltungen:
- EP-A- 0 074 855
- EP-A- 0 512 956
- DE-A- 3 701 124
- GB-A- 2 154 163

## Beschreibung

Die vorliegende Erfindung betrifft eine Schleifmaschine mit einem Schleifkopf, welcher auf einem Schleifschlitten drehbar gelagert ist, mit einem Tisch zur Aufnahme eines Werkstückes und mit einem Messgerät, welches die Ermittlung der gegenseitigen Lage zwischen dem Schleifkopf und dem Werkstück ermöglicht.

Es ist bekannt, Messtaster zur Ermittlung der gegenseitigen Lage zwischen dem Schleifkopf und dem Werkstück zu verwenden. Hierbei kann der Messtaster am Schleifkopf angebracht sein. Eine solche Schleifmaschine ist in GB-A 2 154 163 offenbart. Diese Art der Positionierung des Schleifkopfes gegenüber dem Werkstück wird auch aktive Längspositionierung genannt. Diese Art der Positionierung ermöglicht die Positionierung innerhalb weiten Grenzen entlang dem Werstück. Diese Art der Positionierung ist jedoch verhältnismässig wenig genau.

Wenn der Messtaster auf dem Tisch angeordnet ist, dann spricht man von passiver Längspositionierung. Diese Art der Positionierung ist zwar sehr genau aber der Messbereich des Messtasters ist klein. Ausserdem ist diese Arten der Positionierung eigentlich nur für Schleifköpfe mit einem einzigen Schleifwerkzeug geeignet.

Die Aufgabe der vorliegenden Erfindung ist, eine Schleifmaschine zu offenbaren, bei welcher ihr Schleifkopf mehrere Schleifwerkzeuge trägt und bei welcher die Genauigkeit der Positionierung der Schleifwerkzeuge sich der passiven Längspositionierung zumindest nähern soll.

Diese Aufgabe wird bei der Schleifmaschine der eingangs genannten Gattung erfindungsgemäss so gelöst, wie dies im kennzeichnenden Teil des Anspruchs 1 definiert ist.

Nachstehend werden Ausführungsformen der vorliegenden Erfindung anhand der beiliegenden Zeichnungen näher erläutert. Es zeigt:
Fig. 1 in Draufsicht und schematisch die vorliegende Schleifmaschine, bei welcher ihr Schleifkopf derart eingestellt ist, dass keines der an diesem angebrachten Schleifwerkzeuge sich im Bereich des Werkstückes befindet,
Fig. 2 in einer Seitenansicht die Maschine nach Fig. 1,
Fig. 3 einen vergrösserten Ausschnitt aus Fig. 2,
Fig. 4 einen vergrösserten Ausschnitt aus Fig. 1,
Fig. 5 in Draufsicht die Maschine nach Fig. 1, wenn eines der Werkzeuge für das Planschleifen dem Werkstück zugeordnet ist und
Fig. 6 in Draufsicht die Maschine nach Fig. 1, wenn das Werkzeug für das Innenschleifen dem Werkstück zugeordnet ist.

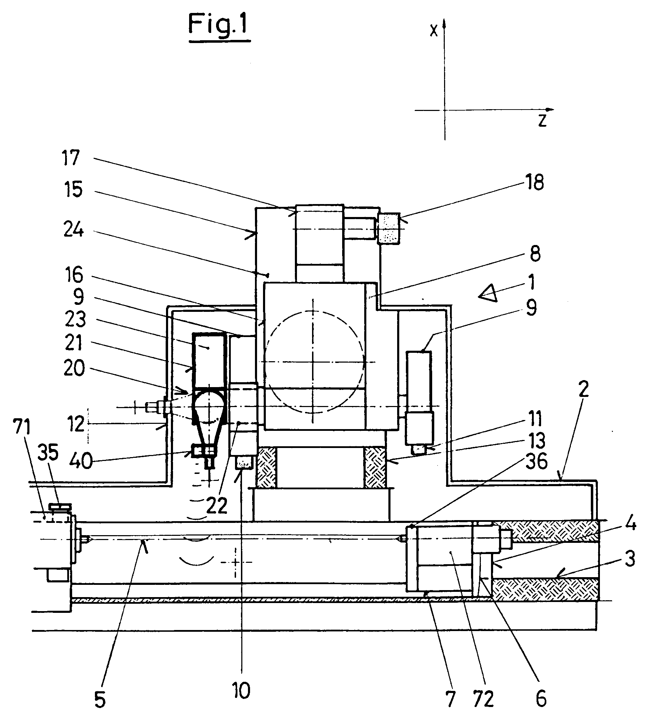

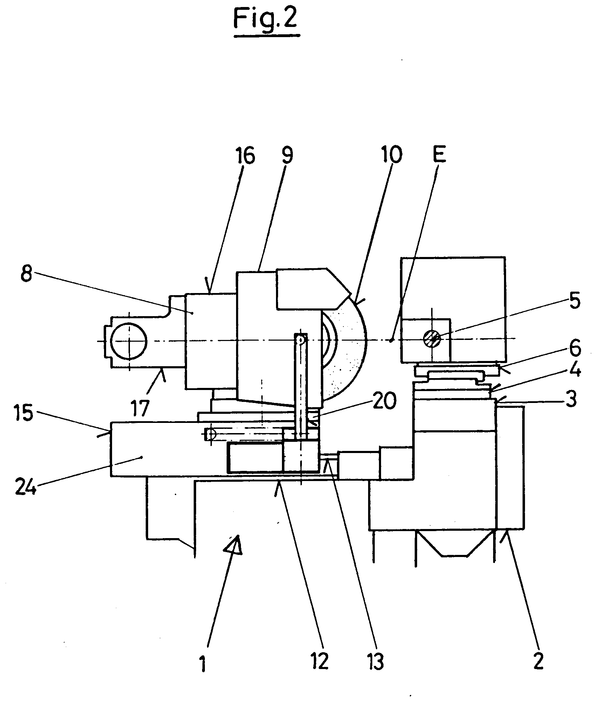

Die vorliegende Schleifmaschine weist ein Bett bzw. einen Ständer 1 auf, welcher einen im wesentlichen T-förmigen Grundriss hat. Auf der Oberseite des Balkenteiles 2 dieses T-förmigen Bettes 1 sind Führungsmittel 3 für einen entlang diesem verschiebbaren Schlitten 4 ausgeführt. Dieser Schlitten 4 ist zur Aufnahme eines Werkstückes vorgesehen und deswegen wird dieser im Nachstehenden auch als Werkstückschlitten bezeichnet. Das Werkstück 5 ist in Fig. 2 nur schematisch dargestellt. Ein Tisch 6 ist auf dem Werkstückschlitten 4 schwenkbar gelagert. Auf diesem Tisch 6 ist eine Einspannvorrichtung 7 für das Werkstück 5 vorgesehen, welche einen Spindelstock 71 und einen Reitstock 72 umfasst. Der Spindelstock 71 kann auf dem Tisch 6 schwenkbar gelagert sein. Der Schleifkopf 16 ist in Fig. 1 derart orientiert, dass das Werkzeug 10, welches für das Aussenschleifen vorgesehen ist, sich in der Bereitschaftsstellung befindet.

Auf der Oberseite des Stielteiles 12 des T-förmigen Maschinenbettes 1 sind Führungsmittel 13 für einen entlang diesem Stielteil 12 bewegbaren Schlitten 15 vorgesehen. Auf diesem Schlitten 15 ist ein Schleifkopf 16 schwenkbar bzw. drehbar gelagert. Deswegen wird dieser Schlitten 15 im Nachstehenden auch als Schleifschlitten 15 bezeichnet. Von zwei einander gegenüberliegenoen Seitenwänden des Gehäuses 8 des Schleifkopfes 16 stehen Wellen ab, an deren Ende von Schutzblechen 9 zum grossen Teil umgebene Schleifscheiben 10 und 11 auswechselbar befestigt sind. Die erste Schleifscheiben 10 ist zum Aussenschleifen der Werkstücke 5 bestimmt. Die zweite der genannten Schleifscheiben 11 hat einen kleineren Durchmesser als die erst genannte Schleifscheibe 10 und sie ist zum Planschleifen der Werkstücke 5 bestimmt.

Von einer der Seitenwände des Schleifkopfes 16, welche sich zwischen den die genannten Schleifscheiben 10 und 11 tragenden Seitenwänden befindet, steht ein Träger 17 für ein weiteres Schleifwerkzeug 18 ab. Am freien Ende dieses Trägers 17 befindet sich das Werkzeug 18, welches zum Innenschleifen von Werkstücken 5 bestimmt ist.

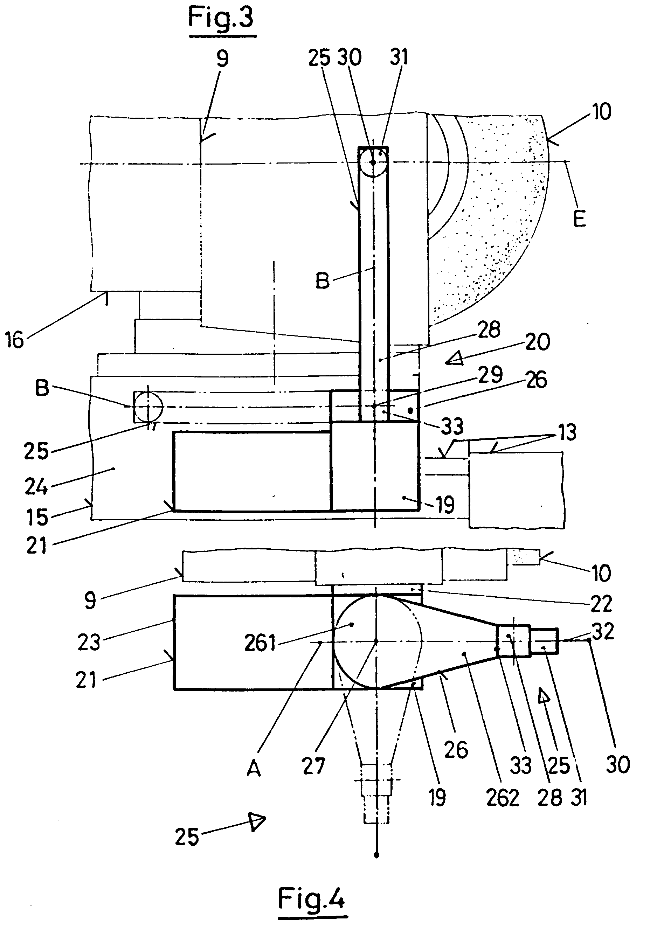

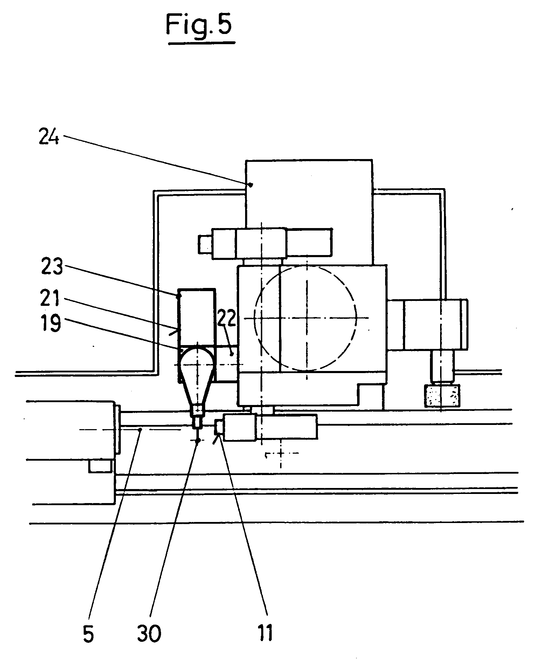

Die Maschine weist ferner ein Messgerät 20 auf, welches die Ermittlung der gegenseitigen Lage zwischen dem Schleifkopf 15, bzw. den an diesem angebrachten Werkzeugen 10, 11 und 18, und dem jeweiligen Werkstück 5 ermöglicht. Dieses Messgerät 20 ist in Fig. 3 und 4 vergrössert dargestellt. Zum Messgerät 20 gehört unter anderem auch eine Basis 21, welche im wesentlichen als ein L-förmiges Gehäuse ausgeführt ist (Fig. 5). Das freie Ende eines der L-Schenkel 22 dieses Gehäuses 21 ist an einer der Seitenflächen des Gehäuses 24 des Schleifschlittens 15 befestigt und ragt praktisch senkrecht von diesem weg. Der andere L-Schenkel 23 des Messgerät-Gehäuses 21 verläuft etwa parallel zur genannten Seitenwand des Gehäuses 24 des Schleifschlittens 15. Das L-förmige Messgerät-Gehäuse 21 liegt in einer Ebene, welche zur Oberfläche des Maschinenbettes 1 praktisch parallel verläuft.

Zum Messgerät 20 gehört ferner ein Messtaster 25. Dieser ist vorteilhaft im Kniebereich des L-förmigen Gehäuses 21 schwenkbar gelagert. Der Messtaster 25 umfasst unter anderem eine Basis 26, welche im wesentlichen flach ausgebildet bzw. plattenförmig ist, wobei diese Basis 26 praktisch horizontal verläuft. Sie besteht aus einem abgerundeten Abschnitt 261 sowie aus einem länglichen Abschnitt 262. Dieser längliche Basisabschnitt 262 ist zusammenlaufend ausgebildet, wobei er in Bezug auf eine Längsachse A der Basis 26 symmetrisch zusammenlaufend ist. Die breitere Endpartie dieses Basisabschnittes 262 schliesst sich an den abgerundeten Basisabschnitt 261 derart an, dass diese zwei Abschnitte 261 und 262 der Basis 26 ein Stück bilden.

Etwa in der Mitte des abgerundeten Basisabschnittes 261 geht eine praktisch vertikal verlaufende Welle 27 durch diesen Abschnitt 261 hindurch, welche dann weiter durch die Oberwand der Kniepartie 19 des Tastergehäuses 21 hindurchgeht und sich im Inneren des Tastergehäuses 21 fortsetzt. Im Inneren des Tastergehäuses 21 können sich unter anderem Mittel für den Antrieb der Schwenkwelle 27 befinden. Die Basis 26 kann um die Welle 27 herum in einer horizontalen Ebene geschwenkt werden, und zwar angetrieben mit Hilfe des genannten Antriebes oder von Hand. Die Schwenkachse 27 kreuzt die Längsachse A der Basis 26 unter dem Einschluss eines rechten Winkels mit dieser.

Die Basis 26 kann zwei Endpositionen in einer horizontalen Ebene einnehmen, zwischen welchen ein Winkel von etwa 90 Grad liegt (Fig. 4). In der ersten Endposition weist die Längsachse A der Basis 26 gegen den Werkstücktisch 6 hin. Diese Position nimmt die Basis 26 ein, wenn sich der Messtaster 25 in seiner Arbeitslage befinden soll. In seiner Arbeitslage kann der Messtaster 25 die Lage des Werkückes 5 oder/und eines der Bestandteile der Maschine ermittel. Darunter ist auch die Ermittlung der Lage des Wirkteiles 30 selbst des Messtasters 25 zu verstehen, wie dies im Nachstehenden erläutert ist. In der zweiten Endposition schliesst die Achse A der Basis 26 den genannten rechten Winkel mit der erst genannten Lage der Längsachse A der Basis 26. Diese Position nimmt die Basis 26 dann ein, wenn der Messtaster 25, beispielsweise während der Bearbeitung des Werkstükes 5, untätig sein soll.

In Fig. 4 ist auch der Messtaster 25 in zwei Lagen dargestellt, welche den zwei bereits behandelten Endlagen der Basis 26 entsprechen. Wenn sich der Messtaster 25 in der mit voller Linie gezeigten Lage befindet, dann ist er in seiner Wirkstellung. In der mit einer strichpunktierten Linie angedeuteten Lage ist der Messtaster 25 unwirksam.

Die von der Schwenkwelle 27 abgewandte Endpartie des zusammenlaufenden Abschnittes 262 der Basis 26, d.h. die schmälere Endpartie, weist eine plane Fläche bzw. Stirnfläche 33 auf, welche zur Längsachse A der Basis 26 senkrecht steht. In einer solchen Endpartie des genannten Basisabschnittes 262 ist eine Welle 29 einerends eingelassen, welche zur Stirnfläche 33 senkrecht verläuft und deren Achse mit der Längsachse A der Basis 26 zusammenfallen kann.

Zum Messtaster 25 gehört ferner ein Schwenkarm 28. Die eine der Endpartien dieses im wesentlichen stangenförmigen Schwenkarmes 28 ist zur Aufnahme des von der Stirnfläche 33 der Basis 26 abstehenden Abschnittes der zweiten Schwenkwelle 29 ausgebildet. Der Arm 28 kann um diese Welle 29 herum geschwenkt werden, und zwar in einer vertikal verlaufenden Ebene. Die Längsachse B dieses Schwenkarmes 28 kann dabei zwei Endlagen einnehmen, welche einen praktisch rechten Winkel zwischen sich schliessen können. In der ersten Endlage verläuft die Achse B des Schwenkarmes 28 praktisch vertikal, während in der zweiten Endlage die Armachse B praktisch horizontal liegt.

Die Achsen der Schleifwerkzeuge 10, 11 und 18 liegen in einer Ebene E (Fig. 3). Der Schwenkarm 28, wenn er sich nicht in seiner zurückgeklappten Lage befindet, steht senkrecht zu dieser Ebene E. Seine Länge ist derart bemessen, dass der Mittelpunkt des Wirkteiles 30 des Messtasters 25 ebenfalls in der Ebene E liegt.

Bei der Darstellung gemäss Fig. 3 befindet sich die Basis 26 in ihrer zweiten bzw. weggeschwenkten Lage, sodass die zweite Schwenkachse 29 senkrecht zur Zeichnungsebene steht. Dies ermöglicht, die zwei Endlagen des Schwenkarmes 28 darzustellen. Die Längsachse B des Schwenkarmes 28 steht bei der mit voller Linie angedeuteten Lage des Schwenkarmes 28 lotrecht und bei der strichpunktiert angedeuteten Lage des Armes 28 verläuft die Achse B praktisch horizontal. In diesen beiden Lagen des Armes 28 ist der Messtaster 25 untätig, weil die Basis 26 weggeschwenkt ist und weil sich der Wirkteil 30 des Messtaste daher ausserhalb der Arbeitszone der Maschine befindet.

Wenn der Schwenkarm 28 aufrecht steht, dann befindet sich der Messtaster 25 in seiner Bereitschaftsstellung. Dies bedeutet, dass er in den Arbeitsbereich der Maschine durch ein Zurückschwenken der Basis 26 ohne weiteres gebracht werden kann. In diesen beiden Stellungen der Basis 26 befindet sich der Arm 28 somit in seiner aufrechten Lage. Wenn die Schleifscheibe 10 ausgewechselt werden soll, dann muss der Schwenkarm 28 in seine zweite Lage geschwenkt werden, damit er beim Auswechseln der Schleifscheibe 10 nicht im Wege steht. Nach der Auswechselung der Schleifscheibe wird der Schwenkarm 28 in seine aufrechte Stellung wieder gebracht.

Im Bereich der anderen, freien Endpartie des Schwenkarmes 28 ist ein Wirkteil 30 des Tastgerätes 20 angeordnet. Vorteilhaft ist dieser Wirkteil 30 als eine Kugel ausgebildet, welche von einem stangenförmigen Distanzglied 32 getragen ist. Die Stirnfläche des Wirkteiles 30 kann am Werkstück 5 oder an einem der Teile der Maschine unmittelbar aufliegen. Der Wirkteil 30 ist über einen Halter 31 am freien Ende des Schwenkarmes 28 befestigt. Dieser Halter 31 kann als ein Gehäuse ausgeführt sein, welches vorteilhaft die Form eines Zylinders hat. Die eine Boden-bzw. Stirnfläche dieses Zylinders 31 ist an jener Seitenwand des Schwenkarmes 28 befestigt, welche dem Werkstück 5 bzw. dem Arbeitstisch 6 zugewandt ist, wenn sich der Messtaster 25 in seiner Wirkstellung befindet. Von der anderen und freien Boden-bzw. Stirnfläche des Zylinders 31 steht die Distanzstange 32 ab, welche den Wirkteil 30 des Messtasters 25 trägt.

Der vom Gehäuse 24 des Schleifschlittens 15 abstehende Schenkel 22 des L-förmigen Tastergehäuses 21 soll möglichst kurz sein, damit der Messtaster 25 sich sehr nahe am Gehäuse 8 des Kopfes 16 befinden kann. Von den Seitenwänden des Schleifkopfgehäuses 8 stehen die Werkzeuge 10, 11 und 18 ab, welche beträchtliche Abmessungen aufweisen. Wenn der Schwenkarm 28 des Messtasters 25 während des Werkzeugwechsels sich in seiner aufrechten Stellung befinden würde, würde er den vom Gehäuse 8 des Schleifkopfes 16 abstehenden Werkzeugen im Wege stehen. Deswegen muss der Schwenkarm 28 in diesem Fall in die angedeutete horizontale Lage gebracht werden.

Die Distanzstange 32 geht durch die vom Schwenkarm 28 abgewandte Stirnfläche des Gehäuses 31 hindurch und diese Endpartie der Distanzstange 32 ist im Inneren des Zylinders 31 gelagert. Diese Lagerung ist so ausgeführt, dass die Distanzstange 32 längsverschiebbar und zudem noch in zumindest einer Ebene, vorteilhaft in einer horizontalen Ebene, schwenkbar ist. Die innenliegende Endpartie der Distanzstange 32 trägt elektrische Kontaktstücke (nicht dargestellt).

Der innenliegende Abschnitt der Kontaktstange 32 trägt zumindest ein Kontaktstück, welches bei einer achsialen Verschiebung der Distanzstange 32 wirksam ist. Ferner trägt dieser Abschnitt der Distanzstange 32 zumindest je ein Kontaktstück, von welchen je einer bei einer der seitlichen Auslenkungen der Distanzstange wirksam ist. In ihrer Schwenkebene weist die Distanzstange 32 eine Ruhelage auf, welche sich zwischen den End-Schwenklagen befindet und in welche die Distanzstange 32 jeweils zurückkehrt, wenn die Kontaktkugel 30 nicht belastet ist. Im Gehäuse 31 sind entsprechende Gegenstücke (nicht dargestellt) angeordnet, welche mit den gennannten Kontaktstücken an der Distanzstange 32 Kontakte bilden und mit diesen zusammenarbeiten. Diese Kontakte sind an die Steuereinrichtung der Maschine angeschlossen.

Wenn sich der Messtaster 25 in seiner Wirklage befindet und wenn er in der Längsrichtung der Distanzstange 32 bewegt wird, dann wird die Wirkkugel 30 während des Vorschubes des Schleifschlittens 15 an das Werkstück 5 herangeführt, bis die Stirnfläche der Kugel 30 das Werkstück 5 berührt und an diesem aufliegt. Während der weiteren Vorwärtsbewegung des Schleifschlittens 15 wird die Distanzstange 32 wegen der Auflage des Wirkteiles 30 derselben am Werkstück 5 an Ort und Stelle gehalten. Infolge dessen wird der achsial betätigbare Kontakt im Gehäuse 31 betätigt, d.h. geöffnet bzw. geschlossen. In dieser Weise kann die Lage der zu behandelnden Oberfläche des Werkstückes 5 in der X-Richtung der Maschine mit Hilfe des Messgerätes 20 ermitelt werden.

Wenn das Werkstück 5 einen Bund bzw. eine Schulter bzw. einen Absatz aufweist und wenn eine der Seitenflächen dieser bearbeitet werden soll, dann muss die Maschine Angaben über die Lage dieser Seitenfläche in der Z-Richtung der Maschine haben. Um diese zu ermitteln, wird der Messtaster 25, der sich in seiner Arbeitslage befindet, derart bewegt, dass er an die zu bearbeitende seitliche Fläche seitlich herangeführt wird, und zwar entweder von der linken oder von der rechten Seite des Werkstückes 5 her. Wie bereits erwähnt worden, ist die Distanzstange 32 samt dem an dieser angebrachten Satz von Kontaktstücken auch seitlich auslenkbar, und zwar in einer horizontalen Ebene. In dieser horizontalen Ebene liegt vorteilhaft auch die Drehachse des Werkstückes 5. Während der genannten Bewegung des Messtasters 25 liegt zunächst die Wirkkugel 30 an der Seitenfläche des Werkstückes 5 an. Da sich der Messtaster 25 jedoch weiter bewegt, wird der entsprechende seitliche Kontakt an der Distanzstange 32 betätigt und er signalisiert der Zentraleinheit der Maschine, dass der Messtaster 25 die betreffende Seitenfläche des Werkstückes erreicht hat. In dieser Weise kann die Lage einer Fläche in der Z-Richtung der Maschine ermittelt werden, und zwar unabhänging davon, ob sich die Maschine der zu bearbeitenden Fläche von der linken oder von rechten Seite des Werkstückes her nähern muss. Diese Möglichkeit stellt einen besonderen Vorteil der vorliegenden Ausführung der Maschine gegenüber den bekannten Maschinen derselben Gattung dar.

Die Aenderungen des Zustandes der Kontakte am Messtaster 25 werden über Leitungen, welche im oder am Messtaster 25 verlegt sind, zu den die Arbeitsweise dieser Maschine steuernden elektronischen Schaltungskreisen der Maschine übertragen. Entsprechend den durch die Kontakte am Messgerät 20 gelieferten Angaben können die im Bearbeitungsprogramm gespeicherten Daten korrigier werden.

Am Spindelstock 71 ist eine Eichplatte 35 angebracht. Die Messoberfläche dieser Eichplatte 35 steht senkrecht zur bereits genannten Ebene E. Die Lage dieser Messfläche im Koordinatensystem der Schleifmaschine ist bekannt und gespeichert. Wenn die Lage des Wirkteiles 30 des Messgerätes 20 ermittelt oder überprüft werden soll, dann kann die Messoberfläche der Eichplatte 35 mit dem Messgerät 20 angefahren werden. Der Messtaster 25 liefert dann Signale, welche die Bestimmung der Lage des Wirkteiles 30 des Messgerätes 20 ermöglichen.

Eine Ueberprüfung der Lage des Wirkteiles 30 muss immer dann durchgeführt werden, nachem der Schwenkarm 28 des Messtasters 25 zurückgeklappt worden ist, beispielsweise um eines der Werkzeuge auswechseln zu können. Durch diese Ueberprüfung wird die aktuelle Lage des Wirkteiles 30 ermittelt. Falls diese aktuelle Lage von jener Lage abweicht, welche der Wirkteil 30 vor dem Zurückklappen des Schwenkarmes 28 aufwies, dann wird diese Differenz gegenüber der ursprünglichen Lage des Wirkteiles 30 durch das Programm berücksichtigt und die Angaben im Programm werden dementsprechen korrigiert. Die genannte Ueberprüfung der Lage des Wirkteiles 30 kann auch in weiteren Situationen zweckmässig sein oder/und sie kann in regelmässigen Zeitabständen automatisch durchgeführt werden.

In dieser Weise kann die Lage der Tischaufbauten in Bezug auf die Richtungen X und Z ermittelt werden, damit diese Aufbauten während des Bearbeitungsvorganges automatisch angefahren werden können. Beispielsweise am Reitstock 72 ist ein Abrichtdiamant 36 angeordnet. Die Lage dieses Abrichtdiamantes 36 im Koordinatensystem der Maschine ist ebenfalls bekannt und gespeichert, sodass der Diamant 36 durch die einzelnen Schleifwerkzeuge 10, 11 und 18 zum Abrichten derselben durch die Maschine automatisch angefahren werden kann.

Die Schleifmaschine kann verschiedene Aufbauten im Bereich des Werkzeugschlittens 4 aufweisen. Damit die automatische Steuerung der Schleifmaschine die jeweilige Art des Aufbaues auf dem Werkstückschlitten 4 berücksichtigen kann, muss die Maschine die Möglichkeit haben, die jeweilige Art von Aufbau zu erkennen. Zu diesem Zweck kann eine Identifikationsvorrichtung 40 verwendet werden, welche am Schleifschlitten 15 angebracht ist. Das eigentliche System zur Identifikation von Aufbauten ist an sich bekannt. Im vorliegenden Fall kann das Erkennungsgerät 40 eines solchen Systems am Schwenkarm 28 des Messtasters 25 angebracht sein. Vorteilhaft ist dieses Erkennungsgerät 40 an einer der Seitenflächen des Schwenkarmes 28 befestigt. Dies ermöglicht, dass das Erkennungsgerät 40 sich zusammen mit dem Wirkteil 30 des Messtasters 25 am Schwenkarm 28 befinden kann. Hierbei kann das Erkennungsgerät 40 an der vom Schleifkopf 16 abgewandten Seite des Schwenkarmes 28 angebracht sein.

In Fig. 5 ist der Schleifkopf 16 in einer Stellung dargestellt, in der sich die Scheibe 11 für das Planschleifen in der Bereitschaftsstellung befindet und in der die Schleifscheibe 11 dem Werkstück 5 gegenübergestellt ist. Der Wirkteil 30 des Messgerätes 20 befindet sich praktisch auf derselben Höhe wie die Welle der Schleifscheibe 11.

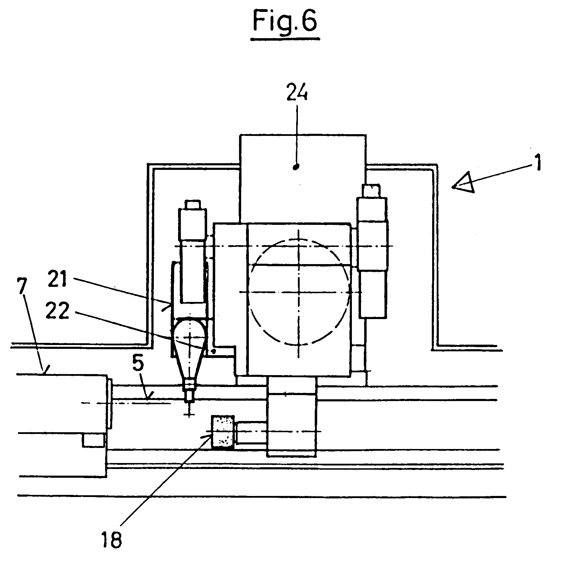

Gemäss Fig. 6 ist der Schleifkopf 16 so eingestellt, dass sich das Werkzeug 18 für das Innenschleifen im Arbeitsbereich der Maschine befindet.

Ein Schwenken des Schleifkopfes 16, um das Messgerät 20 in Aktion bringen zu können, ist im vorliegenden Fall nicht notwendig. Das Messgerät 20 verfährt zusammen mit dem X-Schlitten, d.h. mit dem Schleifschlitten 15, sodass das Messgerät 20 immer in der Nähe des Einsatzortes ist. Bei schwierigen Werkstücken kann das Messgerät 20 ohne Probleme in die Einsatzzone gefahren werden.

Die beschriebene Anordnung ermöglicht unter anderem die Bestimmung der Lage des Werkstückes, damit das NC-Programm um die entsprechende Abweichung korrigiert werden kann. Ausserdem kann diese Anordnung Fabrikationsabweichungen bei den Werkstücken eliminieren, und zwar durch Spannmittel oder durch Zentrenversatz. Auch Einflüsse wie die von Temperatur, Verschmutzung, Kollision usw. können eliminiert werden. Diese Anordnung ist universal verwendbar, d.h. für das Aussen-, Plan- und Innenschleifen. Auch der Einsatz eines Identifikationssystems zur Erkennung der Aufbauten ist bei der beschriebenen Maschine möglich, wobei auch die Lage der Aufbauten sowie die Lage des Abrichtdiamanten in den Koordinaten X und Z ermittelt werden kann. Diese Ausführung der Schleifmaschine ermöglicht ferner die Produktion der Schleifscheibenkanten auf gewünschte Masse sowie automatisches Einrichten der Maschine.

## Patentansprüche

1. Schleifmaschine mit einem Schleifkopf (16), welcher auf einem Schleifschlitten (15) drehbar gelagert ist, mit einem Tisch (6) zur Aufnahme eines Werkstückes (5) und mit einem Messgerät (20), welches die Ermittlung der gegenseitigen Lage zwischen dem Schleifkopf und dem Werkstück ermöglicht, dadurch gekennzeichnet, dass das Messgerät (20) unmittelbar am Schleifschlitten (15) angebracht ist.

2. Schleifmaschine nach Anspruch 1, dadurch gekennzeichnet, dass das Messgerät (20) eine Basis (21) sowie einen Messtaster (25) umfasst, dass die Basis (21) am Schleifschlitten (15) befestigt ist und dass der Messtaster auf der Basis (21) bewegbar angebracht ist.

3. Schleifmaschine nach Anspruch 2, dadurch gekennzeichnet, dass der Messtaster (25) einen in einer horizontalen Ebene schwenkbaren Trägerarm (26) aufweist, welcher dreh- bzw. schwenkbar an der Basis (21) angebracht ist, dass der Messtaster (25) ferner einen Arm bzw. Hebel (28) aufweist und dass eine der Endpartien dieses Armes bzw. Hebels (28) am freien Ende des Trägerarmes (26) derart angelenkt ist, dass dieser Arm (28) gegenüber dem Trägerarm (26) schwenkbar ist.

4. Schleifmaschine nach Anspruch 3, dadurch gekennzeichnet, dass die freie Endpartie des Schwenkarmes (28) den aktiven Teil (30) des Messgerätes (20) trägt.

5. Schleifmaschine nach Anspruch 3, dadurch gekennzeichnet, dass die freie Endpartie des Schwenkarmes (28) eine Vorrichtung (40) zur Identifikation von Aufbauten auf dem Werkstücktisch (6) trägt.

6. Schleifmaschine nach Anspruch 4, dadurch gekennzeichnet, dass der aktive Teil (30) des Messgerätes als eine Kugel ausgebildet ist, welche sich an einem Ende eines stabförmigen Distanzgliedes (32) befindet und dass die entgegengesetzte Endpartie des Stabgliedes (32) in einem Gehäuse eines Halters (31) für den aktiven Tasterteil (30) längsverschiebbar gelagert ist.

7. Schleifmaschine nach Anspruch 6, dadurch gekennzeichnet, dass der Halter (31) an jener Seite des Schwenkhebels (28) angebracht ist, welche dem Werkstück (5) zugewandt ist, wenn sich der Messtaster (25) in seiner Wirkstellung befindet.

8. Schleifmaschine nach Anspruch 6, dadurch gekennzeichnet, dass der Mittelpunkt des Wirkteiles (30) des Messtasters (25) in einer Ebene E liegt, wenn sich der Messtaster (25) in seiner Wirkstellung befindet, in der auch die Drehachse des Werkzeuges (10,11,18) liegt.

9. Schleifmaschine nach Anspruch 1, dadurch gekennzeichnet, dass im Bereich des Maschinentisches (6) sich eine Eichplatte (35) und/oder ein Abrichtdiamant (36) befindet.

10. Schleifmaschine nach Anspruch 3, dadurch gekennzeichnet, dass die Basis (21) im wesentlichen als ein L-förmiges Gehäuse ausgeführt ist, dass das freie Ende eines der L-Schenkel (22) dieses Gehäuses (21) an einer der Seitenflächen des Gehäuses (24) des Schleifschlittens (15) befestigt ist und praktisch senkrecht von diesem absteht, dass der andere L-Schenkel (23) des Messgerät-Gehäuses (21) etwa parallel zur genannten Seitenwand des Gehäuses (24) des Schleifschlittens (15) verläuf, dass das L-förmige Gehäuse (21) in einer Ebene liegt, welche zur Oberfläche des Maschinenbettes (1) parallel verläuft und dass der Trägerarm (26) des Messtasters (25) auf einem Kniestück (19) der Basis (21) gelagert ist, welche die Schenkel (22,23) der L-förmigen Basis (31) verbindet.

## Claims

1. Grinding machine comprising a grinding head (16) rotatably mounted on a grinding saddle (15), a table (6), which serves to receive a workpiece (5), and a measuring device (20) enabling the relative positions of the grinding head and the workpiece to be ascertained, characterized in that the measuring device (20) is mounted directly on the grinding saddle (15).

2. Grinding machine according to Claim 1, characterized in that the measuring device (20) comprises a base (21) and a measuring probe (25), in that the base (21) is fastened to the grinding saddle (15), and in that the measuring probe is mounted movably on the base (21).

3. Grinding machine according to Claim 2, characterized in that the measuring probe (25) has a carrier arm (26) which is swivellable in a horizontal plane and which is mounted on the base (21) for rotation or swivelling, in that the measuring probe (25) also has an arm or lever (28), and in that one of the end parts of this arm or lever (28) is articulated on the free end of the carrier arm (26) such that the said arm (28) is swivellable relative to the carrier arm (26).

4. Grinding machine according to Claim 3, characterized in that the free end part of the swivelling arm (28) carries the active part (30) of the measuring device (20).

5. Grinding machine according to Claim 3, characterized in that the free end part of the swivelling arm (28) carries a device (40) for the identification of attachments on the workpiece table (6).

6. Grinding machine according to Claim 4, characterized in that the active part (30) of the measuring device is in the form of a ball which is situated at one end of a rod-like spacer member (32), and in that the opposite end part of the rod-like member (32) is mounted for longitudinal translation in a casing of a holder (31) for the active probe part (30).

7. Grinding machine according to Claim 6, characterized in that the holder (31) is mounted on that side of the swivel lover (28) which faces the workpiece (5) when the measuring probe (25) is in its operative position.

8. Grinding machine according to Claim 6, characterized in that, when the measuring probe (25) is in its operative position, the centre point of the operative part (30) of the measuring probe (25) lies in a plane E in which the axis of rotation of the tool (10, 11, 18) also lies.

9. Grinding machine according to Claim 1, characterized in that a calibration plate (35) and/or a dressing diamond (36) is or are arranged in the region of the machine table (6).

10. Grinding machine according to Claim 3, characterized in that the base (21) is essentially in the form of an L-shaped casing, in that the free end of one of the limbs (22) of the L of the said casing (21) is fastened to one of the side surfaces of the casing (24) of the grinding saddle (15) and projects from the latter practically at right angles, in that the other limb (23) of the L of the measuring device casing (21) extends approximately parallel to the said side wall of the casing (24) of the grinding saddle (15), in that the L-shaped casing (21) lies in a plane which extends parallel to the surface of the machine bed (1), and in that the carrier arm (26) of the measuring probe (25) is mounted on a knee (19) of the base (21) which knee connects the limbs (22, 23) of the L-shaped base (31).

## Revendications

1. Machine à meuler comprenant une tête porte-meule (16) placée à rotation sur un chariot de meulage (15), une table (6), qui sert à recevoir une pièce à usiner (5), et un dispositif de mesure (20) permettant de déterminer les positions relatives de la tête porte-meule et de la pièce à usiner, caractérisée en ce que le dispositif de mesure (20) est monté directement sur le chariot de meulage (15).

2. Machine à meuler selon la revendication 1, caractérisée en ce que le dispositif de mesure (20) comprend une base (21) et une sonde de mesure (25), en ce que la base (21) est attachée au chariot de meulage (15), et en ce que la sonde de mesure est montée de manière mobile sur la base (21).

3. Machine à meuler selon la revendication 2, caractérisée en ce que la sonde de mesure (25) présente un bras porteur (26) qui peut pivoter dans un plan horizontal et qui est monté à rotation ou à pivotement sur la base (21), en ce que la sonde de mesure (25) a en outre un bras ou levier (28), et en ce que l'une des parties d'extrémité de ce bras ou levier (28) est articulée sur l'extrémité libre du bras porteur (26) de sorte que ledit bras (28) puisse pivoter par rapport au bras porteur (26).

4. Machine à meuler selon la revendication 3, caractérisée en ce que la partie d'extrémité libre du bras pivotant (28) porte la partie active (30) du dispositif de mesure (20).

5. Machine à meuler selon la revendication 3, caractérisée en ce que la partie d'extrémité libre du bras pivotant (28) porte un dispositif (40) pour l'identification d'éléments de montage sur la table (6) pour la pièce à usiner.

6. Machine à meuler selon la revendication 4, caractérisée en ce que la partie active (30) du dispositif de mesure est conçue sous la forme d'une rotule qui se trouve à une extrémité d'un organe d'écartement de type tige (32), et en ce que la partie d'extrémité opposée de l'organe de type tige (32) est placée de façon à pouvoir se déplacer longitudinalement dans un boîtier d'un support (31) pour la partie de sonde active (30).

7. Machine à meuler selon la revendication 6, caractérisée en ce que le support (31) est monté sur le côté du levier pivotant (28) qui fait face à la pièce à usiner (5) lorsque la sonde de mesure (25) se trouve en position fonctionnelle.

8. Machine à meuler selon la revendication 6, caractérisée en ce que, lorsque la sonde de mesure (25) est en position fonctionnelle, le centre de la partie fonctionnelle (30) de la sonde de mesure (25) se trouve dans un plan E dans lequel se trouve également l'axe de rotation de l'outil (10, 11, 18).

9. Machine à meuler selon la revendication 1, caractérisée en ce qu'une plaque d'étalonnage (35) et/ou un diamant de dressage (36) se trouve(nt) à proximité de la table (6) de la machine.

10. Machine à meuler selon la revendication 3, caractérisée en ce que la base (21) est essentiellement réalisée sous la forme d'un boîtier en forme de L, en ce que l'extrémité libre d'une des branches (22) du L dudit boîtier (21) est attachée à l'une des surfaces latérales du boîtier (24) du chariot de meulage (15) et se projette à partir de ce dernier pratiquement à angle droit, en ce que l'autre branche (23) du L du boîtier (21) du dispositif de mesure s'étend de manière approximativement parallèle à ladite paroi latérale du boîtier (24) du chariot de meulage (15), en ce que le boîtier (21) en forme de L se trouve dans un plan qui s'étend de manière parallèle à la surface du banc (1) de la machine, et en ce que le bras porteur (26) de la sonde de mesure (25) est monté sur un genou (19) de la base (21), lequel genou connecte les branches (22, 23) de la base (21) en forme de L.
